Europäisches Patentamt

European Patent Office

Office européen des brevets

(11) Veröffentlichungsnummer: **0 304 714 B1**

(12) # EUROPÄISCHE PATENTSCHRIFT

(45) Veröffentlichungstag der Patentschrift: **18.12.91**

(51) Int. Cl.⁵: **C01B 33/02**

(21) Anmeldenummer: **88112886.2**

(22) Anmeldetag: **08.08.88**

(54) **Verfahren zur Abtrennung von Verunreinigungen aus Silicium.**

(30) Priorität: **19.08.87 DE 3727647**

(43) Veröffentlichungstag der Anmeldung:
**01.03.89 Patentblatt 89/09**

(45) Bekanntmachung des Hinweises auf die
Patenterteilung:
**18.12.91 Patentblatt 91/51**

(84) Benannte Vertragsstaaten:
**BE DE FR IT**

(56) Entgegenhaltungen:
**EP-A- 0 095 756**
**US-A- 4 242 175**

(73) Patentinhaber: **BAYER AG**

**W-5090 Leverkusen 1 Bayerwerk(DE)**

(72) Erfinder: **Kurz, Günter, Dr.**
**Niederrheinstrasse 288**
**W-4000 Düsseldorf 31(DE)**
Erfinder: **Schwirtlich, Ingo, Dr.**
**Hausweberstrasse 26**
**W-4150 Krefeld(DE)**
Erfinder: **Gebauer, Klaus, Dr.**
**Scheiblerstrasse 85**
**W-4150 Krefeld(DE)**

## Beschreibung

Die vorliegende Erfindung betrifft ein Verfahren zur Abtrennung von Verunreinigungen aus Silicium.

Für eine Vielzahl von Anwendungen, z.B. bei der Herstellung von $Si_3N_4$ aus Siliciumpulver für hochreine Keramiken oder auch in der Photovoltaik, wird hochreines Silicium benötigt. Heute wird dafür überwiegend das sehr reine aber auch teure Halbleitersilicium eingesetzt.

Zur Erzielung einr größeren Wirtschaftlichkeit wird weltweit an der Entwicklung kostengünstiger Herstellungsverfahren für reines Silicium gearbeitet. Die am weitesten entwickelten Prozesse beruhen auf der Reinigung von billigem aber verunreinigtem Silicium, welches in großen Mengen durch carbothermische Reduktion von Quarz gewonnen wird, der Herstellung von reinem Silicium durch Einsatz von vorgereinigtem Kohlenstoff und Quarz bei der carbothermischen Reduktion und der aluminothermischen Reduktion von Siliciumtetrachlorid mit Aluminium.

In allen Fällen sind zusätzliche Reinigungsoperationen erforderlich, um die zu hohen Fremdatomgehalte an Bor, Phosphor, Kohlenstoff, Metallen, Metalloxiden und Sauerstoff auf Konzentrationen im ppm-Bereich zu verringern.

Es sind Verfahren bekannt, mit denen diese Verunreinigungen reduziert werden können. Um die hohen Gehalte an Siliciumdioxid und Kohlenstoff, der vorwiegend in Form von Siliciumcarbid vorliegt, in dem durch carbothermische Reduktion von Quarz gewonnenen Silicium zu reduzieren, werden in der DE-A 3 411 955 und der EP-A 0 160 294 Verfahren angegeben, bei denen schmelzflüssiges Silicium über Filter aus Graphit oder SiC/Si-Verbundwerkstoff filtriert wird, wobei die festen Bestandteile im Filter zurückbleiben. Diese Methode kann unter wirtschaftlichen Gesichtspunkten nicht befriedigen, da sich die Filterschicht im Laufe des Betriebes zusetzt und es dadurch zum Abbruch der Reinigungsoperation kommt. Zur Beseitigung der Störung müßte der Reaktor von ca. 1420°C abgekühlt, gereinigt und das Filtermaterial verworfen werden.

Weiterhin ist aus der DE-A-34 03 131 ein Verfahren bekannt, bei dem das Silicium in einem Graphittiegel aufgeschmolzen wird, wodurch sich der nicht reduzierte Quarz und die nicht reagierte Kohle an der Tiegelwand ansammeln. Im Dauerbetrieb kommt es dabei zu Schlackenansammlungen an den Tiegelwänden, die schließlich zur Unbrauchbarkeit des Tiegels führen, wodurch hohe Kosten verursacht werden.

In den Patentanmeldungen DE-A 3 416 559 und DE-A 3 303 691 werden Verfahren beschrieben, bei denen durch Zentrifugieren und Sedimentieren feste SiC- und $SiO_2$-Verunreinigungen aus Siliciumschmelzen abgetrennt werden.

Um gelöste Verunreinigungen aus schmelzflüssigem Silicium zu entfernen, sind aus der Patentliteratur Verfahren bekannt (DE-A 2 623 413, DE-A 2 929 089, EP-A 7063, DE-A 3 504 723, BR-A 83/6289, USA 4 312 849, FR-A 2 465 684, USA 4 298 423, DE-A 2 944 975), in denen die Schmelze mit verschiedenen Gasen beaufschlagt wird.

Mit den beschriebenen Verfahren ist eine wirtschaftliche Entfernung von Metalloxiden, insbesondere Aluminiumoxid jedoch nicht möglich. Darüber hinaus kann keines der Verfahren kontinuierlich betrieben werden.

Es ist ferner gemäß US-A-4 242 175 ein Verfahren zum Reinigen von Silizium bekannt,bei dem pulver- oder granulatförmiges Silizium aufgeschmolzen, und derart auf einen, beispielsweise rippig ausgeformten Körper aufgetragen wird, daß das Silizium als Flüssigkeitsfilm an dem Körper herunterfließt.

Das Ziel der vorliegenden Erfindung ist es daher, ein wirtschaftliches Verfahren zur Abtrennung von Verunreinigungen aus Silicium zur Verfügung zu stellen, welches die oben beschriebenen Nachteile nicht aufweist.

Überraschenderweise wurde nun gefunden, daß beim Erzeugen dünner Siliciumschmelzschichten in innigem Kontakt mit siliciumresistenten Stoffen eine starke Verringerung der genannten Verunreinigungen erzielt werden kann.

Wird dafür Sorge getragen, daß die Siliciumschmelze ablaufen kann, dann bleiben die Verunreinigungen als leicht zu entfernender Belag zurück.

Gegenstand der vorliegenden Erfindung ist somit ein Verfahren zur Abtrennung von Verunreinigungen aus Silicium, welches dadurch gekennzeichnet ist, daß das Silicium in Form von Pulver oder Granulat auf der geneigten Fläche eines Siliciumresistenten Körpers in großflächigem Kontakt geschmolzen wird, sodaß es als Siliciumschmelzfilm abläuft und die Verunreinigungen zurückbleiben.

Dabei ist die Vorgeschichte des zu reinigenden Siliciums ohne Belang.

Es kann z.B. ein aufgemahlenes metallurgisches Silicium mit einer Reinheit von ca. 98 % eingesetzt werden oder auch das nach der EP-A 123 100 hergestellte Siliciumgranulat aus der aluminothermischen Reduktion von Siliciumtetrachlorid.

2

Eine bevorzugte Ausführungsform des erfindungsgemäßen Verfahrens besteht darin, daß der Siliciumschmelzfilm auf einer geneigten Fläche mit einem Winkel von 5° bis 60°, bevorzugt 25°, erzeugt wird.

Besonders gute Ergebnisse werden beim erfindungsgemäßen Verfahren dann erreicht, wenn das Oberflächenverhältnis der Siliciumschmelze in Kontakt mit der geneigten Fläche zu ihrem Volumen > 1 $cm^{-1}$, vorzugsweise zwischen 10 $cm^{-1}$ und 30 $cm^{-1}$, beträgt.

Das erfindungsgemäße Verfahren ist ohne Nachteil in verschiedenen Atmosphären durchführbar. Hierbei kann es sich sowohl um Inertgasatmosphären wie Argon oder Helium als auch um reaktive Gase handeln, mit denen zusätzliche chemische Reaktionen in der Schmelze durchgeführt werden können. Dabei kommen in erster Linie halogenhaltige Reaktionsgase wie z.B. $SiCl_4$ oder Chlorsilane aber auch Mischungen mit Wasserstoff oder Inertgasen in Betracht.

Um gelöste Gase aus der Schmelze zu entfernen ist es günstig, zum Abschluß des Verfahrens eine Vakuumentgasung durchzuführen.

Erfindungsgemäß besteht der siliciumresistente Körper, auf dem der Siliciumschmelzfilm erzeugt wird, aus Keramiken, Mischkeramiken, hochdichtem Graphit und/oder Quarz. Als besonders geeignet im Sinne dieser Erfindung wird als Keramik SiC, $Si_3N_4$ und/oder $Al_2O_3$ verwendet.

Eine besonders vorteilhafte Variante des erfindungsgemäßen Verfahrens im Vergleich zu anderen bekannten Reinigungsverfahren besteht darin, daß das Verfahren kontinuierlich durchgeführt wird.

Vielfach kann es für die Durchführbarkeit des Verfahrens von Vorteil sein, daß das Silicium vor dem Aufschmelzen oberflächlich oxidiert wird.

Im folgenden wird die Erfindung beispielhaft erläutert, ohne daß hierin eine Einschränkung zu sehen ist.

Beispiel 1

Die Versuche zum kontinuierlichen Aufschmelzen und gleichzeitigem Reinigen von Silicium wurden mit einem Siliciumgrieß durchgeführt, der nach einem aus der EP-A 0 123 100 bekannten Verfahren durch Reduktion von $SiCl_4$ mit Aluminiumgrieß erhalten wurde. Nach diesem Verfahren entsteht ein Siliciumgrieß mit einem Korndurchmesser von etwa 1 mm.

Dieser Grieß wurde über eine Förderschnecke in ein geneigtes, auf Siliciumschmelztemperatur erhitztes Graphitrohr eingetragen, über die Rohrlänge aufgeschmolzen und am Rohrende als Schmelze bzw. als über eine Fallstrecke erstarrtes Siliciumgranulat abgenommen. Bei einer Rohrneigung von 25° wurde ein optimaler Produktfluß erreicht. Als Schutzgas wurde Argon verwendet. Bei einer Dosiergeschwindigkeit von 1 kg Si/h wurde die Aufschmelzung über 10 h kontinuierlich betrieben.

Während des kontinuierlichen Aufschmelzens wurde eine Trennung von Schlacken und Si-Schmelze beobachtet. Während des Aufschmelzens wird die Schlacke ausgeschieden und reichert sich an der Produkteintragsseite des Schmelzrohres als lockerer Staub an. Die Schlacke wurde mechanisch über einen Schaber ausgestoßen. In der Schmelze erfolgte eine Abreicherung von schlackebildenden Elementen wie Al, Ca und Mg (siehe Tabelle 1).

Beispiele 2 bis 4

Bei Versuchsdurchführungen entsprechend Beispiel 1 wurden verschiedene Rohrmaterialien untersucht. Es wurden Quarzglas, $Si_3N_4$- und $Al_2O_3$-Keramik verwendet. Für das erfindungsgemäße Verfahren eignen sich alle Rohrmaterialien gleichermaßen, da in allen Fällen eine gute Trennung von Schlacke und Schmelze sowie eine Reinigungswirkung entsprechend Beispiel 1 beobachtet wurde. Je nach verwendetem Rohrmaterial finden sich in der abgetrennten Schlacke zusätzliche, durch Reaktion mit der Schmelze entstandene Bestandteile (siehe Tabelle 2).

Beispiel 5

Die Entfernung des Restreduktionsmittels gelingt auch bei Anwesenheit von Substanzen, die mit dem Reduktionsmittel Schlacken bilden. So wurde das zu reinigende Sigranulat in einem weiteren Versuch zunächst zur Bildung von $SiO_2$ oberflächlich an Luft oxidiert und dann die kontinuierliche Aufschmelzung durchgeführt.

Hirdurch wurde eine stöchiometrische Verringerung des Aluminiumgehaltes erzielt. Dieser Effekt kann auch durch Zugabe von feinteiligem $SiO_2$ zum aufzuschmelzenden Si erreicht werden.

Tabelle 1

| | Al | Ca | Mg |
|---|---|---|---|
| Ausgangsmaterial | 11000 | 3 | 3 ppm |
| Analyse des gereinigten Siliciums | 3000 | 1 | 1 ppm |

Tabelle 2

| Werkstoff des Schmelzrohres | Schlackenbestandteile | |
|---|---|---|
| | Hauptbestandteile | Nebenbestandteile |
| Quarzglas | $Al_2O_3$ | Si, 3 $Al_2O_3 \cdot 2$ $SiO_2$, SiC |
| $Si_3N_4$ | $Al_2O_3$, $Si_2ON_2$ | SiC, $Si_3N_4$ |
| $Al_2O_3$ | $Al_2O_3$ | Si, SiC |
| Graphit | $Al_2O_3$ | SiC, Si |

**Patentansprüche**

1. Verfahren zur Abtrennung von Verunreinigungen aus Silicium, dadurch gekennzeichnet, daß das Silicium in Form von Pulver oder Granulat auf der geneigten Fläche eines Siliciumresistenten Körpers in großflächigem Kontakt geschmolzen wird, sodaß es als Siliciumschmelzfilm abläuft und die Verunreinigungen zurückbleiben.

2. Verfahren gemäß Anspruch 1, dadurch gekennzeichnet, daß der Siliciumschmelzfilm auf einer geneigten Fläche mit einem Winkel von 5° bis 60°, bevorzugt bis 25°, erzeugt wird.

3. Verfahren gemäß einem der Ansprüche 1 oder 2, dadurch gekennzeichnet, daß das Oberflächenverhältnis der Siliciumschmelze in Kontakt mit der geneigten Fläche zu ihrem Volumen > 1 $cm^{-1}$, vorzugsweise zwischen 10 $cm^{-1}$ und 30 $cm^{-1}$ beträgt.

4. Verfahren gemäß einem oder mehrerer der Ansprüche 1 bis 3, dadurch gekennzeichnet, daß der siliciumresistente Körper aus Keramiken, Mischkeramiken, hochdichtem Graphit und/oder Ouarz besteht.

5. Verfahren gemäß Anspruch 4, dadurch gekennzeichnet, daß als Keramik SiC, $Si_3N_4$ und/oder $Al_2O_3$ verwendet werden.

6. Verfahren gemäß einem oder mehrerer der Ansprüche 1 bis 5, dadurch gekennzeichnet, daß das Verfahren kontinuierlich durchgeführt wird.

7. Verfahren gemäß einem oder mehrerer der Ansprüche 1 bis 6, dadurch gekennzeichnet, daß das Silicium vor dem Aufschmelzen oberflächlich oxidiert wird.

**Claims**

1. A process for the removal of impurities from silicon, characterized in that the silicon in the form of powder or granules is melted in large-surface contact on the inclined surface of a silicon-resistant material so that it drains off as a silicon melt film and the impurities remain behind.

2. A process as claimed in claim 1, characterized in that the silicon melt film is produced on a surface inclined at an angle of 5 to 60° and preferably at an angle of up to 25°.

3. A process as claimed in claim 1 or 2, characterized in that the surface ratio of the silicon melt in contact with the inclined surface to its volume is > 1 $cm^{-1}$ and preferably between 10 $cm^{-1}$ and 30

cm$^{-1}$.

4. A process as claimed in one or more of claims 1 to 3, characterized in that the silicon-resistant material consists of ceramics, mixed ceramics, high-density graphite and/or quartz.

5. A process as claimed in claim 4, characterized in that SiC, Si$_3$N$_4$ and/or Al$_2$O$_3$ is/are used as the ceramics.

6. A process as claimed in one or more of claims 1 to 5, characterized in that the process is carried out continuously.

7. A process as claimed in one or more of claims 1 to 6, characterized in that the silicon is surface-oxidized before being melted.

**Revendications**

1. Procédé pour séparer les impuretés contenues dans le silicium, caractérisé en ce que l'on fond te silicium en poudre ou en granulés sur la surface inclinée d'un corps résistant au silicium, avec contact sur une grande surface, en sorte que le silicium s'écoule sous forme d'une pellicule fondue, les impuretés restant en résidu.

2. Procédé selon la revendication 1, caractérisé en ce que l'on forme la pellicule de silicium fondu sur une surface inclinée à un angle de 5 à 60°, de préférence à un angle allant jusqu'à 25°.

3. Procédé selon l'une des revendications 1 ou 2, caractérisé en ce que le rapport entre la surface du silicium fondu en contact avec la surface inclinée et son volume est supérieur à 1 cm$^{-1}$ et de préférence compris entre 10 cm$^{-1}$ et 30 cm$^{-1}$.

4. Procédé selon une ou plusieurs des revendications 1 à 3, caractérisé en ce que le corps résistant au silicium consiste en matière céramique, matière céramique mélangée, graphite à haute densité et/ou quartz.

5. Procédé selon la revendication 4, caractérisé en ce que la matière céramique utilisée consiste en SiC, Si$_3$N$_4$ et/ou Al$_2$O$_3$.

6. Procédé selon une ou plusieurs des revendications 1 à 5, caractérisé en ce qu'il est mis en oeuvre en continu.

7. Procédé selon une ou plusieurs des revendications 1 à 6, caractérisé en ce que le silicium est soumis à une oxydation superficielle avant la fusion.